# EUROPÄISCHE PATENTSCHRIFT

(11) **EP 1 650 240 B1**
(45) Veröffentlichungstag und Bekanntmachung des Hinweises auf die Patenterteilung: **15.08.2007**
(21) Anmeldenummer: 05021980.7
(22) Anmeldetag: 08.10.2005
(51) Int. Cl.: C08G 18/48, C08J 9/12

(54) **Weichelastische Polyurethan Schaumstoffe geringer Rohdichten und Stauchhärte**
Flexible polyurethane foams of low density and low hardness
Mousse flexible de polyurethane ayant une faible densité et à résistance réduite à la compression

(30) Priorität: 19.10.2004 DE 102004051048
(43) Veröffentlichungstag der Anmeldung: 26.04.2006
(73) Patentinhaber: Bayer MaterialScience AG, 51368 Leverkusen (DE)
(72) Erfinder: Meyer-Ahrens, Sven, Dr., 51375 Leverkusen (DE); Steinborn, Klaus, 51373 Leverkusen (DE); Naujoks, Manfred, 51519 Odenthal (DE)

(56) Entgegenhaltungen:
- EP-A- 0 810 256
- EP-A- 1 092 746
- WO-A-00/04071
- TAVERNA M ET AL: "PUR MIT FLUESSIG-CO2 SCHAEUMEN" KUNSTSTOFFE, CARL HANSER VERLAG, MUNCHEN, DE, Bd. 86, Nr. 6, 1. Juni 1996 (1996-06-01), Seiten 810-812,814, XP000588778 ISSN: 0023-5563

## Beschreibung

Die vorliegende Erfindung betrifft weichelastische Polyurethanschaumstoffe mit Rohdichten von weniger als 15 kg/m³ und Stauchhärten von weniger als 1,5 kPa sowie ein Verfahren zu deren Herstellung.

Weichelastische Polyurethanschaumstoffe mit Dichten von 15 kg/m³ und darunter und einer Stauchhärte von weniger als 1,5 kPa wurden früher mit Hilfe von Wasser und FCKW enthaltenden Treibmittelkombinationen hergestellt. Nach dem Verbot von FCKW waren niedrige Rohdichten nur noch durch Einsatz von Treibmitteln wie Dichlormethan oder Aceton oder Verschäumung unter vermindertem Druck zugänglich. Alle diese Verfahren sind mit z.T. erheblichen Nachteilen verbunden: Dichlormethan unterliegt in vielen Ländern strengen Auflagen hinsichtlich der maximalen Arbeitsplatzkonzentration bzw. der Emissionswerte industrieller Produktionsanlagen, bei Verwendung von Aceton sind die Produktionsanlagen explosionsgeschützt auszuführen und die Anwendung von reduziertem Druck erfordert eine aufwendige Einkapselung der Produktionsanlage und erlaubt nur in bedingtem Umfang eine kontinuierliche Produktion.

Die alleinige Verwendung von Wasser als Treibmittel und eine entsprechende Erhöhung der Wassermenge führt zu Schäumen mit sehr schlechten mechanischen Eigenschaften. Darüber hinaus können durch die hohe Exothermie der Treibreaktion Verfärbungen oder sogar Selbstentzündung des Schaums auftreten. Je nach verwendetem Polyol werden durch den Zusatz größerer Mengen Wasser auch die Härte und Sprödigkeit des hergestellten Schaums erhöht.

US 4 970 243 A schlägt für die Herstellung von Weichschaumstoffen mit Rohdichten von weniger als 21 kg/m³ vor, als Treibmittel Wasser in Mengen von 5 bis 15 Teilen pro 100 Teile Polyol einzusetzen und bei sehr niedrigen NCO-Indizes (Verhältnis der Isocyanatgruppen zu den gegenüber Isocyanat reaktiven Gruppen in der Reaktionsmischung multipliziert mit 100) von weniger als 80, bevorzugt 40 bis 65 zu arbeiten.

EP 0 719 627 B1 und EP 0 767 728 B2 lehren die Verwendung von unter Druck gelöstem Kohlendioxid als Treibmittel zur Herstellung konventioneller Schaumstoffe. EP 0 767 728 B2 weist darauf hin, dass sich durch Mitverwendung von Wasser als zusätzlichem Treibmittel so Schäume mit Rohdichten von 15 kg/m³ und darunter erhalten lassen. Mit konventionellen Polyolkomponenten werden bei Einsatz von 6 Teilen CO₂ und 4,6 Teilen Wasser pro 100 Teilen Polyol Rohdichten von 14 kg/m³ erzielen. Die resultierenden Schäume besitzen jedoch nicht die gewünschten Stauchhärten von deutlich unter 1,5 kPa.

US 4 143 004 A und FR 2 172 860 A offenbaren spezielle Polyolmischungen zur Herstellung von Polyurethanweichschaumstoffen mit besonders niedriger Härte, so genannten Hypersoftschaumstoffen. Diese Polyolmischungen enthalten zwei miteinander nicht mischbare Polyetherpolyole und weisen einen Gesamtgehalt an Ethylenoxideinheiten von 50 bis 70 Gew.-% auf. FR 2 172 860 A lehrt, dass die Polyolmischungen einen Gehalt an primären Hydroxylgruppen von 35 bis 55% aufweisen sollen, US 4 143 004 A fordert einen Gehalt an primären Hydroxylgruppen von 55 bis 80%. Die hergestellten Schäume weisen Rohdichten im Bereich von 20 bis 30 kg/m³ auf.

Aufgabe der vorliegenden Erfindung war es, Schaumstoffe mit Rohdichten von weniger als 15 kg/m³, bevorzugt weniger als 13 kg/m³ (gemäß EN-ISO 845) und Stauchhärten von weniger als 1,5 kPa, bevorzugt weniger 1,0 kPa (gemäß EN-ISO 3386-1) und guten sonstigen mechanischen Eigenschaften bereitzustellen.

Es wurde nun gefunden, dass sich derartige Schaumstoffe erhalten lassen, wenn Polyisocyanate mit speziellen Polyolmischungen in Kombination mit hohen Mengen Wasser und unter erhöhtem Druck gelöstem Kohlendioxid als Treibmittel umgesetzt werden.

Gegenstand der Erfindung sind Weichschaumstoffe mit einer Rohdichte von weniger als 15 kg/m³, bevorzugt weniger als 13 kg/m³ und einer Stauchhärte von weniger als 1,5 kPa, bevorzugt weniger als 1,0 kPa, erhältlich durch Reaktion von
a) aromatischem Polyisocyanat mit
b) einer Polyolmischung enthaltend
   b1) 60 bis 90 Gew.-Teile mindestens eines Polyetherpolyols mit einer nominellen Funktionalität von 2 bis 6, bevorzugt 3, einem Oxyethylengehalt von > 60 Gew.-%, bevorzugt > 70 Gew.-%, überwiegend primären OH-Gruppen, bevorzugt 75 bis 85 % primären OH-Gruppen, und einer Hydroxylzahl (OHZ) von 10 bis 112, bevorzugt 40 bis 50; und
   b2) 10 bis 40 Gew.-Teile mindestens eines Polyetherpolyols mit einer nominellen Funktionalität von 2 bis 6, bevorzugt 3, einem Oxyethylengehalt von 0 bis 30 Gew.-%, bevorzugt 10 bis 20 Gew.-%, überwiegend sekundären OH-Gruppen, bevorzugt 30 bis 45 % primären OH-Gruppen, und einer OHZ von 8 bis 112;
c) Wasser, bevorzugt in Mengen von mindestens 6 Gew.-Teilen je 100 Gew.-Teile b);
d) unter Druck gelöstem Kohlendioxid in einer Menge von mindestens 6 Gew.-Teilen je 100 Gew.-Teile b);
e) gegebenenfalls Vernetzern;
f) unter Verwendung von in der Herstellung von PU-Schaumstoffen üblichen Schaumstabilisatoren auf Silikonbasis, Aktivatoren, Metallkatalysatoren und sonstigen Hilfsstoffen;
bei einem NCO-Index von 80 bis 100, bevorzugt 85 bis 95.

Die erfindungsgemäßen Weichschaumstoffe werden hergestellt durch Umsetzung von aromatischen Polyisocyanaten. Bevorzugt wird hierfür Toluylendiisocyanat (TDI) eingesetzt, besonders bevorzugt in Form eines Isomerengemisches, das 80 Gew.-% 2,4-TDI enthält (,TDI 80'). In einer anderen bevorzugten Ausführungsform wird als Polyisocyanat Dipenylmethandiisocyanat (MDI) verwendet in Form von, monomerem MDI, Mischungen aus MDI und dessen höheren Homologen (polymeres MDI) oder Mischungen derselben.

In einer bevorzugten Ausführungsform enthält Komponente b2) ein Polyetherpolyol mit einer OHZ von 28 bis 35; in einer anderen bevorzugten Ausführungsform beträgt die OHZ 42 bis 56. In einer anderen Ausführungsform der Erfindung enthält die Komponente b2) ein Polymerpolyol, ein PHD-Polyol oder ein PIPA-Polyol. Polymerpolyole sind Polyole, die Anteile von durch radikalische Polymerisation geeigneter Monomere wie Styrol oder Acrylnitril in einem Basispolyol erzeugten festen Polymeren enthalten. PHD-Polyole werden durch Polyadditionsreaktion von Diisocyanaten mit Diaminen, z.B. TDI und Hydrazin, in einem Basispolyol hergestellt; PIPA-Polyole durch Polyadditionsreaktion von Diisocyanaten mit Aminoalkoholen. PIPA-Polyole sind in GB 2 072 204 A, DE 31 03 757 Al und US 4 374 209 A eingehend beschrieben.

Optional können e) Vernetzer mitverwendet werden. Vernetzer sind Verbindungen mit einem Molekulargewicht von 32 bis 400 und mindestens zwei gegenüber Isocyanat reaktiven Gruppen. In einer bevorzugten Ausführungsform der Erfindung wird als Vernetzer Sorbit in einer Menge von 0,5 bis 5 Gew.-Teilen, bevorzugt 1 bis 2 Gew.-Teile, bezogen auf 100 Gew.-Teile b), verwendet.

Die Herstellung der erfindungsgemäßen Schäume erfolgt in dem Fachmann im Prinzip bekannter Weise in diskontinuierlichen oder kontinuierlichen Verfahren, z.B. dem Draka-Petzetakis-, Maxfoam-, Hennecke-Planiblock- oder Vertifoam-Verfahren. Einzelheiten sind in G. Oertel (Hrsg.): "Kunststoff Handbuch", Bd. 7 "Polyurethane", 3.Aufl., Hanser Verlag, München 1993, S.193-220 beschrieben.

### Beispiele

Mit folgenden Rohstoffen wurden gemäß den in Tab. 1 angegebenen Rezepturen Weichschaumstoffe hergestellt. Alle Schaumstoffe wurden auf einer Hennecke UBT 78 im kontinuierlichen Verfahren hergestellt. Der Gesamtpolyol-Ausstoß betrug ca. 28 kg/min, Rührerdrehzahl 3500-4500 U/min. Die Polyoltemperatur lag bei 25°C, die Isocyanattemperatur betrug 21°C. Die Dosierung des Polyols erfolgte bei ca. 30 bar, die des Isocyanates bei ca. 85 bar (Düsendruck). Den Schaumstoffblöcken wurden nach 24h Lagerung Probekörper zur Bestimmung der mechanischen Werte entnommen. Die Dosierung von Kohlendioxid erfolgte über eine Novaflex Anlage der Fa. Hennecke.
- Polyol A:: Glycerin gestarteter EO/PO Polyether mit ca. 72% EO, überwiegend prim. OH-Gruppen und einer OH-Zahl von 37
- Polyol B:: Glycerin gestarteter EO/PO Polyether mit ca. 8% EO, überwiegend sek. OH-Gruppen und einer OH-Zahl von 48
- Desmodur® T 80:: TDI 80, Bayer AG
- Stabilisator BF 2370:: Polyethermodifiziertes Polysiloxan (Tegostab® BF 2370, Degussa-Goldschmidt AG).
- Katalysator 33LV:: Lösung von Triethylendiamin in Propylenglykol (Dabco® 33LV, Air Products).
- Katalysator Al:: Lösung von Bis-Dimethylaminoethylether in Propylenglykol (Niax® A1, GE (vormals Witco / OSI)).
- Katalysator T-9:: Zinn-Dioctoat (Dabco® T-9, Air Products).

**Tabelle 1**

| **Beispiel** | | **1** | **2*** | **3*** |
|---|---|---|---|---|
| Polyol A | [Gew.-Tle.] | 75 | - | - |
| Polyol B | [Gew.-Tle.] | 25 | 100 | 100 |
| Kohlendioxid (CO2) | [Gew.-Tle.] | 6 | | 6 |
| Wasser | [Gew.-Tle.] | 6,00 | 6,00 | 4,6 |
| Stabilisator BF 2370 | [Gew.-Tle.] | 1,50 | 1,80 | 1,50 |
| Katalysator 33 LV | [Gew.-Tle.] | 0,10 | 0,10 | - |
| Katalysator A 1 | [Gew.-Tle.] | 0,03 | 0,05 | 0,05 |
| Katalysator T-9 | [Gew.-Tle.] | 0,05 | 0,25 | 0,17 |
| Desmodur^{®} T 80 | [Gew.-Tle.] | 57,9 | 58,9 | 56,6 |
| Kennzahl | | 90 | 90 | 110 |
| Rohdichte (EN-ISO 845) | [kg/m³] | 11,3 | 13,5 | 13,6 |
| Zugfestigkeit (EN-ISO 1798) | [kPa] | 92 | n.b. | 60 |
| Bruchdehnung (EN-ISO 1798) | [%] | 432 | n.b. | 157 |
| Stauchhärte 40% (EN-ISO 3386-1) | [kPa] | 0,44 | n.b. | 1,97 |
| DVR (90%) (EN-ISO 1856) | [%] | 15,8 | n.b. | 5,4 |
| Schaumstruktur | | fein, unregelmäßig | Schwammstruktur | fein, regelmäßig |

| | | | | |
|---|---|---|---|---|
| * Vergleichsbeispiel | | | | |

Beispiel 1 führt zu einem erfindungsgemäßen Schaumstoff, der die gewünschte geringe Stauchhärte bei niedrigen Rohdichten aufweist. Die Porenstruktur war einwandfrei.

Beispiel 2 beschreibt die Zusammensetzung und das Versuchsresultat zur Herstellung eines nicht erfindungsgemäßen Schaumstoffs niedriger Rohdichte. Das CO₂ wurde nicht im Schaumgemisch gehalten und führte zu einer schwammartigen Struktur mit großen Lunkern. Eine Bestimmung mechanischer Eigenschaften war nicht möglich, da keine homogenen Prüfkörper erhalten werden konnten. Trotz der stark erhöhten Wassermenge war die Rohdichte höher als bei dem erfindungsgemäßen Schaum.

Beispiel 3 beschreibt einen nicht erfindungsgemäßen Schaum, der zwar mit hohen CO₂-Mengen hergestellt wurde, nicht aber die niedrige Rohdichte und Stauchhärte des erfindungsgemäßen Schaumstoffes erreichte.

## Patentansprüche

1. Weichschaumstoff mit einer Rohdichte von weniger als 15 kg/m³ und einer Stauchhärte von weniger als 1,5 kPa, erhältlich durch Reaktion von
a) aromatischem Polyisocyanat mit
b) einer Polyolmischung enthaltend
b1) 60 bis 90 Gew.-Teile mindestens eines Polyetherpolyols mit einer nominellen Funktionalität von 2 bis 6, einem Oxyethylengehalt von > 60 Gew.%, überwiegend primären OH-Gruppen und einer Hydroxylzahl von 10 bis 112; und
b2) 10 bis 40 Gew.-Teile mindestens eines Polyetherpolyols mit einer nominellen Funktionalität von 2 bis 6, einem Oxyethylengehalt von 0 bis 30 Gew.-%, überwiegend sekundären OH-Gruppen und einer OHZ von 8 bis 112;
c) Wasser;
d) unter Druck gelöstem Kohlendioxid in einer Menge von mindestens 6 Gew.-Teilen je 100 Gew.-Teile b);
e) gegebenenfalls Vernetzern;
f) unter Verwendung von in der Herstellung von PU-Schaumstoffen üblichen Schaumstabilisatoren auf Silikonbasis, Aktivatoren, Metallkatalysatoren und sonstigen Hilfsstoffen;
bei einem NCO-Index von 80 bis 100.

2. Weichschaumstoff gemäß Anspruch 1, bei dem als aromatisches Polyisocyanat Diphenylmethandiisocyanat, polymeres MDI oder Mischungen davon eingesetzt werden.

3. Weichschaumstoff gemäß Anspruch 1, bei dem die Komponente b2) ein Polymerpolyol enthält.

4. Weichschaumstoff gemäß Anspruch 1, bei dem die Komponente b2) ein PHD-Polyol enthält.

5. Weichschaumstoff gemäß Anspruch 1, bei dem die Komponente b2) ein PIPA-Polyol enthält.

6. Weichschaumstoff gemäß Anspruch 1, bei dem als Vernetzer e) Sorbit eingesetzt wird.

7. Verfahren zur Herstellung von Weichschaumstoffen, bei dem
a) aromatisches Polyisocyanat mit
b) einer Polyolmischung enthaltend
b1) 60 bis 90 Gew.-Teile mindestens eines Polyetherpolyols mit einer nominellen Funktionalität von 2 bis 6, einem Oxyethylengehalt von > 60 Gew.%, überwiegend primären OH-Gruppen und einer Hydroxylzahl von 10 bis 112; und
b2) 10 bis 40 Gew.-Teile mindestens eines Polyetherpolyols mit einer nominellen Funktionalität von 2 bis 6, einem Oxyethylengehalt von 0 bis 30 Gew.-%, überwiegend sekundären OH-Gruppen und einer OHZ von 8 bis 112;
c) Wasser in einer Menge von mindestens 6 Gew.-Teilen je 100 Gew.-Teile b);
d) unter Druck gelöstem Kohlendioxid in einer Menge von mindestens 6 Gew.-Teilen je 100 Gew.-Teile b);
e) gegebenenfalls Vernetzern;
f) unter Verwendung von in der Herstellung von PU-Schaumstoffen üblichen Schaumstabilisatoren auf Silikonbasis, Aktivatoren, Metallkatalysatoren und sonstigen Hilfsstoffen;
bei einem NCO-Index von 80 bis 100 umgesetzt wird.

## Claims

1. Flexible foam with a bulk density less than 15 kg/m³ and a compressive strength less than 1.5 kPa, obtainable by the reaction of
a) aromatic polyisocyanate with
b) a polyol mixture comprising
b1) 60 to 90 parts by weight of at least one polyetherpolyol with a nominal functionality of 2 to 6, an oxyethylene content of > 60 wt.%, mainly primary OH groups and with a hydroxyl value of 10 to 112; and
b2) 10 to 40 parts by weight of at least one polyetherpolyol with a nominal functionality of 2 to 6, an oxyethylene content of 0 to 30 wt.%, mainly secondary OH groups and an OHV of 8 to 112;
c) water;
d) carbon dioxide dissolved under pressure in an amount of at least 6 parts by weight per 100 parts by weight of b);
e) optionally cross-linking agents;
f) with the use of foam stabilisers based on silicone, activators, metal catalysts and other auxiliary agents conventionally used when producing PU foams;
at a NCO index of 80 to 100.

2. Flexible foam according to Claim 1, in which diphenylmethane diisocyanate, polymeric MDI or mixtures thereof are used as the aromatic polyisocyanate.

3. Flexible foam according to Claim 1, in which component b2) contains a polymer polyol.

4. Flexible foam according to Claim 1, in which component b2) contains a PHD polyol.

5. Flexible foam according to Claim 1, in which component b2) contains a PIPA polyol.

6. Flexible foam according to Claim 1, in which sorbitol is used as cross-linking agent e).

7. A process for producing flexible foams in which
a) aromatic polyisocyanate is reacted with
b) a polyol mixture comprising
b1) 60 to 90 parts by weight of at least one polyetherpolyol with a nominal functionality of 2 to 6, an oxyethylene content of > 60 wt.%, mainly primary OH groups and with a hydroxyl value of 10 to 112; and
b2) 10 to 40 parts by weight of at least one polyetherpolyol with a nominal functionality of 2 to 6, an oxyethylene content of 0 to 30 wt.%, mainly secondary OH groups and an OHV of 8 to 112;
c) water in an amount of at least 6 parts by weight per 100 parts by weight of b);
d) carbon dioxide dissolved under pressure in an amount of at least 6 parts by weight per 100 parts by weight of b);
e) optionally cross-linking agents;
f) with the use of foam stabilisers based on silicone, activators, metal catalysts and other auxiliary agents conventionally used when producing PU foams;
at a NCO index of 80 to 100.

## Revendications

1. Mousse flexible possédant une masse volumique apparente inférieure à 15 kg/m³ et une résistance à la compression inférieure à 1,5 kPa, qui peut être obtenue par réaction de
a) un polyisocyanate aromatique avec
b) un mélange de polyols contenant
b1) 60 à 90 parties en poids d'au moins un polyétherpolyol présentant une fonctionnalité nominale comprise entre 2 et 6, une teneur en oxyéthylène supérieure à 60 % en poids, des groupes OH principalement primaires et un indice d'hydroxyle compris entre 10 et 112 et
b2) 10 à 40 parties en poids d'au moins un polyétherpolyol présentant une fonctionnalité nominale comprise entre 2 et 6, une teneur en oxyéthylène comprise entre 0 et 30 % en poids, des groupes OH principalement secondaires et un indice d'hydroxyle compris entre 8 et 112;
c) de l'eau;
d) du dioxyde de carbone dissous sous pression dans une proportion d'au moins 6 parties en poids pour 100 parties en poids de b);
e) le cas échéant, des réticulants;
f) en utilisant des stabilisants de mousse à base de silicone, des activateurs, des catalyseurs métalliques et d'autres adjuvants usuels dans la production des mousses de PU;
avec un indice NCO compris entre 80 et 100.

2. Mousse flexible selon la revendication 1, dans laquelle on utilise comme polyisocyanate aromatique, du diphénylméthanediisocyanate, du MDI polymère ou des mélanges de ceux-ci.

3. Mousse flexible selon la revendication 1, dans laquelle, le composant b2) contient un polyol polymère.

4. Mousse flexible selon la revendication 1, dans laquelle, le composant b2) contient un polyol PHD.

5. Mousse flexible selon la revendication 1, dans laquelle, le composant b2) contient un polyol PIPA.

6. Mousse flexible selon la revendication 1, dans laquelle on utilise du sorbitol comme réticulant e).

7. Procédé de production de mousses flexibles, dans lequel on fait réagir
a) un polyisocyanate aromatique avec
b) un mélange de polyols contenant
b1) 60 à 90 parties en poids d'au moins un polyétherpolyol présentant une fonctionnalité nominale comprise entre 2 et 6, une teneur en oxyéthylène supérieure à 60 % en poids, des groupes OH principalement primaires et un indice d'hydroxyle compris entre 10 et 112 et
b2) 10 à 40 parties en poids d'au moins un polyétherpolyol présentant une fonctionnalité nominale comprise entre 2 et 6, une teneur en oxyéthylène comprise entre 0 et 30 % en poids, des groupes OH principalement secondaires et un indice d'hydroxyle compris entre 8 et 112;
c) de l'eau dans une proportion d'au moins 6 parties en poids pour 100 parties en poids de b);
d) du dioxyde de carbone dissous sous pression dans une proportion d'au moins 6 parties en poids pour 100 parties en poids de b);
e) le cas échéant, des réticulants;
f) en utilisant des stabilisants de mousse à base de silicone, des activateurs, des catalyseurs métalliques et d'autres adjuvants usuels dans la production des mousses de PU;
avec un indice NCO compris entre 80 et 100.
